# EUROPEAN PATENT SPECIFICATION

(11) **EP 3 127 952 B1**
(45) Date of publication and mention of the grant of the patent: **11.10.2017**
(21) Application number: 16180510.6
(22) Date of filing: 21.07.2016
(51) Int. Cl.: C08K 5/00, C08K 5/29, C08G 77/12, C08G 77/20, C08L 83/04

(54) **ADDITION-CURABLE SILICONE RUBBER COMPOSITION**
ADDITIONSHÄRTBARE SILIKONKAUTSCHUKZUSAMMENSETZUNG
COMPOSITION DE CAOUTCHOUC SILICONE DURCISSABLE PAR ADDITION

(30) Priority: 05.08.2015 JP 2015154904
(43) Date of publication of application: 08.02.2017
(73) Proprietor: Shin-Etsu Chemical Co., Ltd., Tokyo (JP)
(72) Inventor: KATO, Nobu, Annaka-shi, Gunma (JP); IINO, Mikio, Annaka-shi, Gunma (JP)
(74) Representative: Ter Meer Steinmeister & Partner

(56) References cited:
- EP-A1- 0 808 875
- EP-A1- 2 374 832
- GB-A- 2 059 980
- US-A1- 2005 054 762

## Description

### TECHNICAL FIELD

This invention relates to an addition-curable silicone rubber composition which cures into a silicone rubber that exhibits excellent flame retardancy without compromising mechanical or rubber properties.

### BACKGROUND ART

Silicone rubbers are used in a wide variety of fields, for example, health care materials such as bottle teats and tableware, hoses and gasket materials for automobile use, building members, and fiber coating materials because of heat resistance, freeze resistance, safety, appearance, transparency, touch and durability.

Since silicone rubbers have the main skeleton composed of siloxane bonds, they contain less organic constituents (i.e., hydrocarbon constituents) than conventional organic rubbers and are rather nonflammable. However, silicone rubbers will ignite and burn under severe conditions, for example, upon direct contact with flame.

The prior art proposal for overcoming the above problem is to add flame retardants to silicone rubber compositions, for example, aluminum hydroxide and carbon black as described in JP-A 2004-161944 and zinc carbonate powder as described in JP-A H09-316336. When conventional flame retardants including aluminum hydroxide, carbon black and zinc carbonate powder are added to silicone rubber compositions, they cause appearance changes and viscosity buildup to the silicone rubber base and alter physical properties (e.g., mechanical strength and elongation) of the cured product or rubber.

Document EP-A-2 374 832 describes a curable silicone composition comprising an organopolysiloxane containing at least two alkenyl groups, an organohydrogenpolysiloxane containing at least three SiH groups, an aromatic ring-free organohydrogenpolysiloxane containing at least two SiH groups and a catalyst, with a SiH/alkenyl molar ratio ranging from 0.8 to 5.0. The omposition may further comprise an isocyanate-containing silane compound and other additives such as flame retardants.

Document EP-A-808 875 relates to silicone rubber compositions comprising polyorganosiloxane, fumed silica, zinc carbonate surface treated with an organosilicon compound selected from organosilanes, organosilazanes, organosiloxane oligomers, a polyorganohydrogensiloxane and a platinum catalyst. The compositions may further comprise surface treated aluminum hydroxide, a triazole compound, and a reaction mixture of a platinum compound and 3,5-dimethyl-1-hexyn-3-ol.

Document US-A-2005/054762 describes a silicone rubber coating composition comprising 100 parts by weight of a diorganopolysiloxane containing at least 2 alkenyl groups per molecul, 0.1-100 parts by weight of finely divided silica, a curing agent comprising a platinium catalyst, an organopolysiloxane comprising Si-H groups and 0.1-20 parts by weight of a compound consisting of a organosilicon compound isocyanuric acid ester (ex. 3-isocyanatopropyltriethoxysilane.. The composition may further comprise other additives such as flame retardants.

Document GB-A-2 059 980 describes a fire retardant silicone rubber composition comprising an organopolysiloxane comprising alkenyl groups, a finely divided silica filler, a platinium-based catalyst, a fatty acid compound, a metal salt of therof and an organic peroxide. The composition may further contain a triazole derivative. The benzotriazole compound and the fatty acid compound work synergistically to provide flame retardancy properties.

### Citation List

- Patent Document 1:: JP-A 2004-161944
- Patent Document 2:: JP-A H09-316336 (EP 0808875)

### DISCLOSURE OF INVENTION

An object of the invention is to provide an addition-curable silicone rubber composition having a flame retardant added thereto, in which flame retardancy is improved without detracting from physical properties of the silicone rubber base.

The inventors have found that when a combination of a triazole compound and an isocyanate compound in specific amounts is added to an addition-curable silicone rubber composition containing an alkenyl-containing organopolysiloxane, organohydrogenpolysiloxane, reinforcing silica and a platinum catalyst, there is obtained a silicone rubber composition which cures into a silicone rubber having excellent flame retardancy. Physical properties of the silicone rubber base are not compromised as opposed to conventional flame retardants.

The invention provides an addition-curable silicone rubber composition comprising:
(A) 100 parts by weight of an alkenyl-containing organopolysiloxane having at least two silicon-bonded alkenyl groups per molecule,
(B) an organohydrogenpolysiloxane having at least two silicon-bonded hydrogen atoms per molecule, in an amount of 0.2 to 20 parts by weight per 100 parts by weight of component (A),
(C) reinforcing silica fine powder having a specific surface area of at least 50 m²/g as measured by the BET method, in an amount of 5 to 80 parts by weight per 100 parts by weight of components (A) and (B) combined,
(D) a catalytic amount of a platinum catalyst,
(E) a triazole compound in an amount of 4 to 100 moles per mole of platinum in component (D), and
(F) an isocyanate compound in an amount of 4 to 100 moles per mole of platinum in component (D).

Preferably, component (E) is selected from the group consisting of 1,2,3-triazole, 1,2,4-triazole, and derivatives thereof. Most preferably, component (E) is benzotriazole.

Preferably, component (F) is selected from the group consisting of an alkyl isocyanate compound, aryl isocyanate compound, and isocyanate silane compound which is an isocyanate having a silane moiety. More preferably, component (F) is a compound having the formula (I): 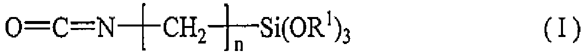 wherein R¹ is alkyl or trialkylsilyl and n is an integer of 1 to 6.

The composition is heat cured into a silicone rubber preferably having a flame retardancy rated as V-2 or better level according to the UL94 standard.

### ADVANTAGEOUS EFFECTS OF INVENTION

The addition-curable silicone rubber composition comprising components (A) to (F) blended in specific amounts affords a silicone rubber which exerts excellent flame retardancy without detracting from physical properties of the silicone rubber base.

### DESCRIPTION OF EMBODIMENTS

Component (A), which is a main component or base polymer of the composition, is an organopolysiloxane having at least two silicon-bonded alkenyl groups per molecule. An organopolysiloxane having the average compositional formula (II) is useful.

R²ₐSiO_{(4-a)/2} (II)

Herein R² is each independently a substituted or unsubstituted monovalent hydrocarbon group of 1 to 10 carbon atoms, preferably 1 to 8 carbon atoms, and "a" is a positive number in the range of 1.5 to 2.8, preferably 1.8 to 2.5, and more preferably 1.95 to 2.05.

R² is a silicon-bonded, substituted or unsubstituted, monovalent hydrocarbon group of 1 to 10 carbon atoms, preferably 1 to 8 carbon atoms, examples of which include linear, branched or cyclic alkyl groups such as methyl, ethyl, propyl, isopropyl, butyl, isobutyl, tert-butyl, pentyl, neopentyl, hexyl, cyclohexyl, octyl, nonyl and decyl, aryl groups such as phenyl, tolyl, xylyl and naphthyl, aralkyl groups such as benzyl, phenylethyl and phenylpropyl, linear, branched or cyclic alkenyl groups such as vinyl, allyl, propenyl, isopropenyl, butenyl, hexenyl, cyclohexenyl and octenyl, and substituted forms of the foregoing in which some or all hydrogen atoms are substituted by halogen (e.g., fluorine, bromine and chlorine), cyano or the like, such as chloromethyl, chloropropyl, bromoethyl, trifluoropropyl, and cyanoethyl. It is preferred that at least 90 mol% of R² groups be methyl.

At least two of R² groups must be alkenyl groups, preferably of 2 to 8 carbon atoms, more preferably 2 to 6 carbon atoms, most often vinyl.

In the organopolysiloxane, the content of alkenyl groups is preferably 1.0×10⁻⁶ mol/g to 3.0×10⁻³ mol/g, more preferably 1.0×10⁻⁵ mol/g to 2.0×10⁻³ mol/g. An organopolysiloxane containing less than 1.0×10⁻⁶ mol/g of alkenyl may have too low a rubber hardness and become gel-like. An alkenyl content in excess of 3.0×10⁻³ mol/g may give an extremely high crosslinking density, resulting in rubber having an extremely high hardness and losing elasticity. The alkenyl group may be bonded to the silicon atom at the end of the molecular chain and/or a silicon atom midway the molecular chain (i.e., at a non-terminal position of the molecular chain).

The organopolysiloxane (A) is basically a linear diorganopolysiloxane capped at either end of the molecular chain with a triorganosiloxy group (R²₃SiO_{1/2}) and having a backbone composed of repeating diorganosiloxane units (R²₂SiO_{2/2}). An organopolysiloxane partially containing a branched or cyclic structure having monoorganosilsesquioxane units (R²SiO_{3/2}) is also acceptable. Herein R² is as defined above.

With respect to molecular weight or degree of polymerization (DOP), the organopolysiloxane usually has an average DOP (i.e., number average DOP) of 100 to 50,000, preferably 150 to 20,000. A DOP of less than 100 may fail to provide a cured product with adequate rubber texture whereas an organopolysiloxane having a DOP in excess of 50,000 may have too high a viscosity to mold. The molecular weight or DOP may be measured, for example, as number average molecular weight or number average DOP by gel permeation chromatography (GPC) versus polystyrene standards using toluene as developing solvent.

Examples of the organopolysiloxane as component (A) include diorganoalkenylsiloxy-endcapped diorganopolysiloxane, organodialkenylsiloxy-endcapped diorganopolysiloxane, trialkenylsiloxy-endcapped diorganopolysiloxane, triorganosiloxy-endcapped diorganosiloxane/organoalkenyl-siloxane copolymers, diorganoalkenylsiloxy-endcapped diorganosiloxane/organo-alkenylsiloxane copolymers, and diorganosiloxane/organoalkenylsiloxane copolymers having a diorganoalkenylsiloxy group at one end and a triorganosiloxy group at the other end. Inter alia, diorganoalkenylsiloxy-endcapped diorganopolysiloxane, triorganosiloxy-endcapped diorganosiloxane/organoalkenyl-siloxane copolymers, and diorganoalkenylsiloxy-endcapped diorganosiloxane/organo-alkenylsiloxane copolymers are preferred. It is noted that the term "endcapped" means that a siloxane is capped at both ends of the molecular chain with the referenced groups, unless otherwise stated. The "organo" group in each siloxane means a substituted or unsubstituted monovalent hydrocarbon group (exclusive of aliphatic unsaturated groups such as alkenyl) as exemplified for R² in formula (II). Component (A) may be used alone or in combination of two or more.

Component (B) is an organohydrogenpolysiloxane having at least two, preferably at least 3 silicon-bonded hydrogen atoms (or SiH groups) in a molecule. Component (B) serves as a curing agent or crosslinker for curing the composition through the mechanism that hydrosilylation or addition reaction takes place between SiH groups in its molecule and silicon-bonded alkenyl groups in component (A) to form crosslinks.

Preferred as component (B) is an organohydrogenpolysiloxane having at least two, preferably at least 3, more preferably 3 to 100, and most preferably 4 to 50 silicon-bonded hydrogen atoms (or SiH groups) in a molecule, represented by the average compositional formula (III).

R³_{b}H_{c}SiO_{(4-b-c)/2} (III)

Herein R³ is each independently a substituted or unsubstituted monovalent hydrocarbon group of 1 to 10 carbon atoms, preferably 1 to 8 carbon atoms, b is a positive number of 0.7 to 2.1, c is a positive number of 0.001 to 1.0, and b+c is 0.8 to 3.0.

Examples of the monovalent hydrocarbon group represented by R³ are as exemplified above for R², with hydrocarbon groups free of aliphatic unsaturation being preferred. The subscript b is a positive number of 0.7 to 2.1, preferably 0.8 to 2.0, c is a positive number of 0.001 to 1.0, preferably 0.01 to 1.0, and the sum of b+c is 0.8 to 3.0, preferably 1.0 to 2.5. The molecular structure of the organohydrogenpolysiloxane may be linear, cyclic, branched or three-dimensional network.

In the organohydrogenpolysiloxane, the content of SiH groups is preferably 0.0005 to 0.020 mol/g, more preferably 0.001 to 0.017 mol/g. A SiH content of less than 0.0005 mol/g may lead to insufficient crosslinking whereas a siloxane with a SiH content in excess of 0.020 mol/g may be unstable.

More preferred is an organohydrogenpolysiloxane in which the number of silicon atoms per molecule (i.e., degree of polymerization) is 2 to 300, even more preferably 3 to 150, most preferably 4 to 100 and which is liquid at room temperature (25°C). The silicon-bonded hydrogen atom may be present at the end of the molecular chain and/or at a position midway the molecular chain (i.e., at a non-terminal position). Examples of the organohydrogenpolysiloxane as component (B) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, methylhydrogensiloxane/dimethylsiloxane cyclic copolymers, trimethylsiloxy-endcapped methylhydrogenpolysiloxane, trimethylsiloxy-endcapped dimethylsiloxane/methylhydrogensiloxane copolymers, dimethylhydrogensiloxy-endcapped dimethylpolysiloxane, dimethylhydrogensiloxy-endcapped dimethylsiloxane/methylhydrogensiloxane copolymers, trimethylsiloxy-endcapped methylhydrogensiloxane/diphenylsiloxane copolymers, trimethylsiloxy-endcapped methylhydrogensiloxane/diphenylsiloxane/dimethylsiloxane copolymers, trimethylsiloxy-endcapped methylhydrogensiloxane/methylphenylsiloxane/dimethylsiloxane copolymers, dimethylhydrogensiloxy-endcapped methylhydrogensiloxane/dimethylsiloxane/diphenylsiloxane copolymers, dimethylhydrogensiloxy-endcapped methylhydrogensiloxane/dimethylsiloxane/methylphenylsiloxane copolymers, copolymers consisting of (CH₃)₂HSiO_{1/2} units, (CH₃)₃SiO_{1/2} units and SiO_{4/2} units, copolymers consisting of (CH₃)₂HSiO_{1/2} units and SiO_{4/2} units, copolymers consisting of (CH₃)₂HSiO_{1/2} units, SiO_{4/2} units and (C₆H₅)SiO_{3/2} units, and substituted forms of the foregoing in which some or all methyl groups are substituted by other alkyl groups or phenyl groups.

The organohydrogenpolysiloxane (B) may be a polyvalent aromatic ring-containing organohydrogenpolysiloxane which corresponds to the above-exemplified compound or similar compound, but has a di- to tetravalent aromatic ring-containing hydrocarbon skeleton (e.g., phenylene skeleton, bisphenylene skeleton, bis(phenylene)ether skeleton, bis(phenylene)methane skeleton, 2,2-bis(phenylene)propane skeleton and 2,2-bis(phenylene)hexafluoropropane skeleton) in some of siloxane skeletons (-Si-O-Si-) (typically, at some of the positions of oxygen atoms in siloxane bonds) to constitute its molecule.

The organohydrogenpolysiloxane (B) is added in an amount of 0.2 to 20 parts, preferably 0.3 to 10 parts by weight per 100 parts by weight of component (A). Component (B) is added in such an amount that the molar ratio of silicon-bonded hydrogens (or SiH) in organohydrogenpolysiloxane (B) to total silicon-bonded alkenyl groups in components (A) and (B), especially component (A), referred to as "SiH/alkenyl ratio", may be from 0.8/1 to 10/1, specifically 1.0/1 to 5/1. If the SiH/alkenyl ratio is less than 0.8, cure or crosslinking density may be insufficient, resulting in a sticky rubber. If the SiH/alkenyl ratio exceeds 10, a molded silicone rubber may contain bubbles or mold release be difficult. Component (B) may be used alone or in combination of two or more.

Component (C) is reinforcing silica fine powder, which may be any type of silica commonly used as rubber reinforcement. Although any silica fine powder used in conventional silicone rubber compositions is useful, the reinforcing silica fine powder should have a specific surface area of at least 50 m²/g as measured by the BET method. It is advantageous to use precipitated silica (wet silica), fumed silica (dry silica) and fired silica having a BET specific surface area of 50 to 400 m²/g, specifically 100 to 350 m²/g, with the fumed silica being especially advantageous for improved rubber strength. Silica with a surface area of less than 50 m²/g fails to provide the cured product with mechanical strength.

The reinforcing silica fine powder may be surface treated with organosilicon compounds, typically hydrolyzable organosilicon compounds, such as chlorosilanes, alkoxysilanes and organosilazanes for rendering the surface hydrophobic. The silica powder may be directly surface treated (to be hydrophobic) in powder state with a surface treating agent prior to use. Alternatively, the silica powder may be surface treated (to be hydrophobic) by adding a surface treating agent during the step of mixing the silica powder with silicone oil (e.g., alkenyl-containing organopolysiloxane (A)).

For the surface treatment, any well-known techniques may be used. For example, an untreated silica fine powder and a surface treating agent are admitted into a mechanical milling device closed under atmospheric pressure or a fluidized bed where they are mixed to effect surface treatment at room temperature or elevated temperature, optionally in the presence of an inert gas. If desired, a catalyst (e.g., hydrolysis accelerant) is used to promote the surface treatment. The mixing step is followed by drying, yielding a treated silica fine powder. The amount of the surface treating agent used is at least the theoretical amount calculated from the surface area of powder to be covered with the agent.

Suitable treating agents include silazanes such as hexamethyldisilazane; silane coupling agents such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldichlorosilane, divinyldimethoxysilane and chloropropyltrimethoxysilane; and organosilicon compounds such as polymethylsiloxane and organohydrogenpolysiloxane. After the surface treatment with such agents, the resulting silica fine particles are hydrophobic and ready for use. Of these treating agents, the silane coupling agents and silazanes are preferred.

An appropriate amount of component (C) blended is 5 to 80 parts, preferably 5 to 60 parts, and more preferably 10 to 60 parts by weight per 100 parts by weight of components (A) and (B) combined. Less than 5 parts by weight of silica is insufficient for reinforcement whereas a silicone rubber composition with more than 80 parts by weight of silica is too viscous to work or process and results in a cured rubber with low mechanical strength.

Component (D) is a platinum catalyst, examples of which include platinum black, platinic chloride, chloroplatinic acid, the reaction product of chloroplatinic acid with monohydric alcohol, chloroplatinic acid-olefin complexes, and platinum bisacetoacetate. The platinum catalyst may be used in a catalytic amount, which is typically about 0.5 to about 1,000 ppm, specifically about 1 to about 500 ppm of platinum based on the total weight of components (A), (B) and (C).

Component (E) is a triazole compound, which serves as a flame retardant in the sense that when it is added to the silicone rubber composition together with component (F) in specific amounts, they co-work to selectively impart flame retardancy to cured silicone rubber without detracting from its physical properties (or rubber properties) such as mechanical strength and elongation at break.

Examples of the triazole compound (E) include 1,2,3-triazole, 1,2,4-triazole, and derivatives thereof. Suitable derivatives of 1,2,3-triazole include benzotriazole, 4-hydroxy-1,2,3-triazole, 1,2,3-triazole-4-aldehyde, and 4-cyano-1,2,3-triazole. Suitable derivatives of 1,2,4-triazole include 5-amino-3-methyl-1,2,4-triazole and 3-mercapto-1,2,4-triazole. Of these, benzotriazole, 1,2,3-triazole and 1,2,4-triazole are most preferred. These compounds may be used alone or in combination of two or more.

An appropriate amount of component (E) blended is 4 to 100 moles, preferably 4 to 80 moles, more preferably 4 to 60 moles, and even more preferably 4 to 50 moles per mole of platinum in component (D). Less than 4 moles of component (E) is too small to provide a flame retardant effect whereas more than 100 moles of component (E) may interfere with cure.

Component (F) is an isocyanate compound, which serves as a flame retardant in the sense that when it is added to the silicone rubber composition together with component (E) in specific amounts, they co-work to selectively impart flame retardancy to cured silicone rubber without detracting from physical properties (or rubber properties) such as mechanical strength and elongation at break.

Examples of the isocyanate compound (F) include alkyl isocyanate compounds such as methyl isocyanate, butyl isocyanate and octyl isocyanate and aryl isocyanate compounds such as phenyl isocyanate and tolyl isocyanate, as well as isocyanate silane compounds, i.e., isocyanate compounds containing a silane moiety, as represented by the general formula (I): 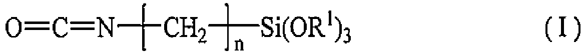 wherein R¹ is alkyl or trialkylsilyl and n is an integer of 1 to 6.

R¹ is an alkyl group, preferably of 1 to 4 carbon atoms, typically methyl or ethyl, or a trialkylsilyl group in which each alkyl moiety is preferably of 1 to 4 carbon atoms such as methyl or ethyl, typically trimethylsilyl or triethylsilyl.

Of these, most preferred are octyl isocyanate, 3-isocyanatopropyltrimethoxysilane, 3-isocyanatopropyltriethoxysilane, and 3-isocyanatopropyltris(trimethylsiloxy)silane, which may be used alone or in combination of two or more.

An appropriate amount of component (F) blended is 4 to 100 moles, preferably 4 to 80 moles, more preferably 4 to 60 moles, and even more preferably 4 to 50 moles per mole of platinum in component (D). With less than 4 moles or more than 100 moles of component (F), a sufficient flame retardant effect may not be obtained.

Other components may be compounded in the composition, if necessary. Included are fillers such as quartz powder, diatomaceous earth and calcium carbonate; conductive agents such as carbon black, conductive zinc oxide and metal powder; hydrosilylation inhibitors such as nitrogen-containing compounds, acetylene compounds, phosphorus compounds, nitrile compounds, carboxylates, tin compounds, mercury compounds and sulfur compounds; heat resistance enhancers such as iron oxide and cerium oxide; internal mold release agents such as dimethylsilicone oil; adhesion promoters such as SiH-free organosilicon compounds, typically alkoxysilanes, containing at least one functional group selected from alkenyl, epoxy, amino, (meth)acryloxy and mercapto groups in the molecule; and thixotropic agents.

In one embodiment wherein the addition-curable silicone rubber composition is a liquid rubber composition, i.e., liquid composition which is self-flowing at room temperature, the silicone rubber composition preferably has a viscosity of 10 to 5,000 Pa·s, more preferably 20 to 3,000 Pa·s at 25°C as measured by a rotational viscometer such as BL, BH, BS or cone-plate type viscometer. The composition having a viscosity of less than 10 Pa·s may be less flame retardant whereas the composition with a viscosity in excess of 5,000 Pa·s may be too viscous to mold. In another embodiment wherein the addition-curable silicone rubber composition is a millable rubber composition, i.e., non-liquid composition which is non-self-flowing at room temperature and millable under shear stresses, the silicone rubber composition preferably has a plasticity of 100 to 400, more preferably 150 to 350 at 25°C as measured according to JIS K6249. A composition having a plasticity of less than 100 or more than 400 may be difficult to mold.

The addition-curable silicone rubber composition may be molded and cured in accordance with standard methods. An appropriate molding method may be selected from injection molding, transfer molding, cast molding, and compression molding depending on the intended application. For curing, heat treatment (or primary vulcanization) may be carried out at 40 to 230°C for about 3 seconds to about 160 minutes. Below 40°C, curing may take a very long time. Above 230°C, the cured rubber may be degraded. Optionally, the cured composition may be post-cured (or secondary vulcanization) at 40 to 230°C for about 10 minutes to about 24 hours.

The addition-curable silicone rubber composition is cured into a silicone rubber having a flame retardancy rated as V-2 or better level according to the UL94 standard. The addition-curable silicone rubber composition having the desired flame retandancy rating is obtained by homogeneously blending specific amounts of components (E) and (F) in a conventional addition-curable silicone rubber composition containing components (A), (B), (C) and (D).

The addition-curable silicone rubber composition is useful in the application where flame retardancy is required, especially as building gasket material, resin cloth coating, conductor coating and the like.

### EXAMPLE

Examples of the invention are given below by way of illustration and not by way of limitation. In Examples, all parts are by weight. The degree of polymerization (DOP) is a number average DOP as measured by gel permeation chromatography (GPC) versus polystyrene standards using toluene as developing solvent.

### Example 1

Dimethylvinylsiloxy-endcapped dimethylpolysiloxane (A1) having a DOP of 750, 60 parts, was mixed with 40 parts of fumed silica (C1) having a BET specific surface area of 300 m²/g (Aerosil 300, Nippon Aerosil Co., Ltd.), 8 parts of hexamethyldisilazane, and 2.0 parts of water at room temperature for 30 minutes. The mixture was heated to 150°C, stirred for 3 hours, and cooled, yielding a silicone rubber base.

To 100 parts of the silicone rubber base, were added 40 parts of the dimethylpolysiloxane (A1), 5 parts of trimethylsiloxy-endcapped dimethylpolysiloxane (A2) having 2.5 mol% of methyl groups on side chains (i.e., monovalent groups or atoms bonded to silicon atoms on diorganosiloxane units of the backbone) replaced by vinyl groups and having a DOP of 200, 1.79 parts (SiH/total vinyl = 1.8 mol/mol) of trimethylsiloxy-endcapped methylhydrogenpolysiloxane (B1) having SiH groups on side chains (DOP: 27, SiH content: 0.0069 mol per gram of trimethylsiloxy-endcapped dimethylsiloxane/methylhydrogensiloxane copolymer) as a crosslinker, 0.01 part of benzotriazole (E1), 0.025 part of 3-isocyanatopropyltriethoxysilane (F1), and 0.10 part of ethynylcyclohexanol as a reaction inhibitor. The mixture was stirred for 15 minutes, yielding a silicone rubber blend having a viscosity of 560 Pa·s at 25°C as measured by a BS type viscometer with No. 7 rotor at 10 rpm.

The silicone rubber blend was mixed with 0.25 part of a toluene solution of platinum-1,3-divinyl-1,1,3,3-tetramethyldisiloxane complex (D1) having a Pt concentration of 1 wt% (a molar ratio of (E1)/platinum in (D1) = 6.7, a molar ratio of (F1)/platinum in (D1) = 7.9), forming a homogeneous silicone rubber composition. The composition was press cured (or primary vulcanized) at 120°C for 10 minutes and post-cured (or secondary vulcanized) in an oven at 200°C for 4 hours to form a cured product. The cured product was visually observed for outer appearance (i.e., color and transparency), measured for hardness, tensile strength, elongation at break, and tear strength (crescent specimen) according to JIS K6249, and tested for flame retardancy according to the UL94 standard. The results are shown in Table 1.

### Example 2

Dimethylvinylsiloxy-endcapped dimethylpolysiloxane (A1) having a DOP of 750, 60 parts, was mixed with 40 parts of fumed silica (C1) having a BET specific surface area of 300 m²/g (Aerosil 300, Nippon Aerosil Co., Ltd.), 8 parts of hexamethyldisilazane, and 2.0 parts of water at room temperature for 30 minutes. The mixture was heated to 150°C, stirred for 3 hours, and cooled, yielding a silicone rubber base.

To 100 parts of the silicone rubber base, were added 40 parts of the dimethylpolysiloxane (A1), 5 parts of trimethylsiloxy-endcapped dimethylpolysiloxane (A2) having 2.5 mol% of methyl groups on side chains replaced by vinyl groups and having a DOP of 200, 1.09 parts of trimethylsiloxy-endcapped methylhydrogenpolysiloxane (B2) having SiH groups on side chains (DOP: 80, SiH content: 0.0055 mol per gram of trimethylsiloxy-endcapped dimethylsiloxane/methylhydrogensiloxane copolymer) and 2.06 parts of dimethylhydrogensiloxy-endcapped methylhydrogenpolysiloxane (B3) having SiH groups on side chains (DOP: 15, SiH content: 0.0053 mol per gram of dimethylhydrogensiloxy-endcapped dimethylsiloxane/methylhydrogensiloxane copolymer) as crosslinkers (total SiH/total vinyl = 2.5 mol/mol), 0.015 part of benzotriazole (E1), 0.04 part of 3-isocyanatopropyltrimethoxysilane (F2), and 0.10 part of ethynylcyclohexanol as a reaction inhibitor. The mixture was stirred for 15 minutes, yielding a silicone rubber blend having a viscosity of 590 Pa·s at 25°C as measured by a BS type viscometer with No. 7 rotor at 10 rpm.

The silicone rubber blend was mixed with 0.25 part of a 2-ethylhexanol solution of chloroplatinic acid (D2) having a Pt concentration of 1 wt% (a molar ratio of (E1)/platinum in (D2) = 9.8, a molar ratio of (F2)/platinum in (D2) = 15.5), forming a homogeneous silicone rubber composition. The composition was press cured (or primary vulcanized) at 120°C for 10 minutes and post-cured (or secondary vulcanized) in an oven at 200°C for 4 hours to form a cured product. The cured product was visually observed for outer appearance (i.e., color and transparency), measured for hardness, tensile strength, elongation at break, and tear strength (crescent) according to JIS K6249, and tested for flame retardancy according to the UL94 standard. The results are shown in Table 1.

### Example 3

Dimethylvinylsiloxy-endcapped dimethylpolysiloxane (A1) having a DOP of 750, 60 parts, was mixed with 40 parts of fumed silica (C1) having a BET specific surface area of 300 m²/g (Aerosil 300, Nippon Aerosil Co., Ltd.), 8 parts of hexamethyldisilazane, and 2.0 parts of water at room temperature for 30 minutes. The mixture was heated to 150°C, stirred for 3 hours, and cooled, yielding a silicone rubber base.

To 100 parts of the silicone rubber base, were added 40 parts of the dimethylpolysiloxane (A1), 5 parts of trimethylsiloxy-endcapped dimethylpolysiloxane (A2) having 2.5 mol% of methyl groups on side chains replaced by vinyl groups and having a DOP of 200, 1.79 parts (SiH/total vinyl = 1.8 mol/mol) of trimethylsiloxy-endcapped methylhydrogenpolysiloxane (B1) having SiH groups on side chains (DOP: 27, SiH content: 0.0069 mol per gram of trimethylsiloxy-endcapped dimethylsiloxane/methylhydrogensiloxane copolymer) as a crosslinker, 0.02 part of benzotriazole (E1), 0.13 part of 3-isocyanatopropyltris(trimethylsiloxy)silane (F3), and 0.10 part of ethynylcyclohexanol as a reaction inhibitor. The mixture was stirred for 15 minutes, yielding a silicone rubber blend having a viscosity of 610 Pa·s at 25°C as measured by a BS type viscometer with No. 7 rotor at 10 rpm.

The silicone rubber blend was mixed with 0.25 part of a toluene solution of platinum-1,3-divinyl-1,1,3,3-tetramethyldisiloxane complex (D1) having a Pt concentration of 1 wt% (a molar ratio of (E1)/platinum in (D1) = 13.1, a molar ratio of (F3)/platinum in (D1) = 26.8), forming a homogeneous silicone rubber composition. The composition was press cured (or primary vulcanized) at 120°C for 10 minutes and post-cured (or secondary vulcanized) in an oven at 200°C for 4 hours to form a cured product. The cured product was visually observed for outer appearance (i.e., color and transparency), measured for hardness, tensile strength, elongation at break, and tear strength (crescent) according to JIS K6249 and tested for flame retardancy according to the UL94 standard. The results are shown in Table 1.

### Comparative Example 1

Dimethylvinylsiloxy-endcapped dimethylpolysiloxane (A1) having a DOP of 750, 60 parts, was mixed with 40 parts of fumed silica (C1) having a BET specific surface area of 300 m²/g (Aerosil 300, Nippon Aerosil Co., Ltd.), 8 parts of hexamethyldisilazane, and 2.0 parts of water at room temperature for 30 minutes. The mixture was heated to 150°C, stirred for 3 hours, and cooled, yielding a silicone rubber base.

To 100 parts of the silicone rubber base, were added 40 parts of the dimethylpolysiloxane (A1), 5 parts of trimethylsiloxy-endcapped dimethylpolysiloxane (A2) having 2.5 mol% of methyl groups on side chains replaced by vinyl groups and having a DOP of 200, 1.79 parts (SiH/total vinyl = 1.8 mol/mol) of trimethylsiloxy-endcapped methylhydrogenpolysiloxane (B1) having SiH groups on side chains (DOP: 27, SiH content: 0.0069 mol per gram of trimethylsiloxy-endcapped dimethylsiloxane/methylhydrogensiloxane copolymer) as a crosslinker, and 0.10 part of ethynylcyclohexanol as a reaction inhibitor. The mixture was stirred for 15 minutes, yielding a silicone rubber blend having a viscosity of 620 Pa·s at 25°C as measured by a BS type viscometer with No. 7 rotor at 10 rpm.

The silicone rubber blend was mixed with 0.25 part of a toluene solution of platinum-1,3-divinyl-1,1,3,3-tetramethyldisiloxane complex (D1) having a Pt concentration of 1 wt%, forming a homogeneous silicone rubber composition. The composition was press cured (or primary vulcanized) at 120°C for 10 minutes and post-cured (or secondary vulcanized) in an oven at 200°C for 4 hours to form a cured product. The cured product was visually observed for outer appearance (i.e., color and transparency), measured for hardness, tensile strength, elongation at break, and tear strength (crescent) according to JIS K6249, and tested for flame retardancy according to the UL94 standard. The results are shown in Table 1.

### Comparative Example 2

Dimethylvinylsiloxy-endcapped dimethylpolysiloxane (A1) having a DOP of 750, 60 parts, was mixed with 40 parts of fumed silica (C1) having a BET specific surface area of 300 m²/g (Aerosil 300, Nippon Aerosil Co., Ltd.), 8 parts of hexamethyldisilazane, and 2.0 parts of water at room temperature for 30 minutes. The mixture was heated to 150°C, stirred for 3 hours, and cooled, yielding a silicone rubber base.

To 100 parts of the silicone rubber base, were added 40 parts of the dimethylpolysiloxane (A1), 5 parts of trimethylsiloxy-endcapped dimethylpolysiloxane (A2) having 2.5 mol% of methyl groups on side chains replaced by vinyl groups and having a DOP of 200, 1.79 parts (SiH/total vinyl = 1.8 mol/mol) of trimethylsiloxy-endcapped methylhydrogenpolysiloxane (B1) having SiH groups on side chains (DOP: 27, SiH content: 0.0069 mol per gram of trimethylsiloxy-endcapped dimethylsiloxane/methylhydrogensiloxane copolymer) as a crosslinker, 0.01 part of benzotriazole (E1), and 0.10 part of ethynylcyclohexanol as a reaction inhibitor. The mixture was stirred for 15 minutes, yielding a silicone rubber blend having a viscosity of 620 Pa·s at 25°C as measured by a BS type viscometer with No. 7 rotor at 10 rpm.

The silicone rubber blend was mixed with 0.25 part of a toluene solution of platinum-1,3-divinyl-1,1,3,3-tetramethyldisiloxane complex (D1) having a Pt concentration of 1 wt% (a molar ratio of (El)/platinum in (D1) = 6.7), forming a homogeneous silicone rubber composition. The composition was press cured (or primary vulcanized) at 120°C for 10 minutes and post-cured (or secondary vulcanized) in an oven at 200°C for 4 hours to form a cured product. The cured product was visually observed for outer appearance (i.e., color and transparency), measured for hardness, tensile strength, elongation at break, and tear strength (crescent) according to JIS K6249, and tested for flame retardancy according to the UL94 standard. The results are shown in Table 1.

### Comparative Example 3

Dimethylvinylsiloxy-endcapped dimethylpolysiloxane (A1) having a DOP of 750, 60 parts, was mixed with 40 parts of fumed silica (C1) having a BET specific surface area of 300 m²/g (Aerosil 300, Nippon Aerosil Co., Ltd.), 8 parts of hexamethyldisilazane, and 2.0 parts of water at room temperature for 30 minutes. The mixture was heated to 150°C, stirred for 3 hours, and cooled, yielding a silicone rubber base.

To 100 parts of the silicone rubber base, were added 40 parts of the dimethylpolysiloxane (A1), 5 parts of trimethylsiloxy-endcapped dimethylpolysiloxane (A2) having 2.5 mol% of methyl groups on side chains replaced by vinyl groups and having a DOP of 200, 1.79 parts (SiH/total vinyl = 1.8 mol/mol) of trimethylsiloxy-endcapped methylhydrogenpolysiloxane (B1) having SiH groups on side chains (DOP: 27, SiH content: 0.0069 mol per gram of trimethylsiloxy-endcapped dimethylsiloxane/methylhydrogensiloxane copolymer) as a crosslinker, 0.025 part of 3-isocyanatopropyltriethoxysilane (F1), and 0.10 part of ethynylcyclohexanol as a reaction inhibitor. The mixture was stirred for 15 minutes, yielding a silicone rubber blend having a viscosity of 630 Pa·s at 25°C as measured by a BS type viscometer with No. 7 rotor at 10 rpm.

The silicone rubber blend was mixed with 0.25 part of a toluene solution of platinum-1,3-divinyl-1,1,3,3-tetramethyldisiloxane complex (D1) having a Pt concentration of 1 wt% (a molar ratio of (F1)/platinum in (D1) = 7.9), forming a homogeneous silicone rubber composition. The composition was press cured (or primary vulcanized) at 120°C for 10 minutes and post-cured (or secondary vulcanized) in an oven at 200°C for 4 hours to form a cured product. The cured product was visually observed for outer appearance (i.e., color and transparency), measured for hardness, tensile strength, elongation at break, and tear strength (crescent) according to JIS K6249, and tested for flame retardancy according to the UL94 standard. The results are shown in Table 1.

### Comparative Example 4

Dimethylvinylsiloxy-endcapped dimethylpolysiloxane (A1) having a DOP of 750, 60 parts, was mixed with 40 parts of fumed silica (C1) having a BET specific surface area of 300 m²/g (Aerosil 300, Nippon Aerosil Co., Ltd.), 8 parts of hexamethyldisilazane, and 2.0 parts of water at room temperature for 30 minutes. The mixture was heated to 150°C, stirred for 3 hours, and cooled, yielding a silicone rubber base.

To 100 parts of the silicone rubber base, were added 40 parts of the dimethylpolysiloxane (A1), 5 parts of trimethylsiloxy-endcapped dimethylpolysiloxane (A2) having 2.5 mol% of methyl groups on side chains replaced by vinyl groups and having a DOP of 200, 1.79 parts (SiH/total vinyl = 1.8 mol/mol) of trimethylsiloxy-endcapped methylhydrogenpolysiloxane (B1) having SiH groups on side chains (DOP: 27, SiH content: 0.0069 mol per gram of trimethylsiloxy-endcapped dimethylsiloxane/methylhydrogensiloxane copolymer) as a crosslinker, 0.02 part of benzotriazole (E1), and 0.10 part of ethynylcyclohexanol as a reaction inhibitor. The mixture was stirred for 15 minutes, yielding a silicone rubber blend having a viscosity of 600 Pa·s at 25°C as measured by a BS type viscometer with No. 7 rotor at 10 rpm.

The silicone rubber blend was mixed with 0.25 part of a toluene solution of platinum-1,3-divinyl-1,1,3,3-tetramethyldisiloxane complex (D1) having a Pt concentration of 1 wt% (a molar ratio of (E1)/platinum in (D1) = 13.1), forming a homogeneous silicone rubber composition. The composition was press cured (or primary vulcanized) at 120°C for 10 minutes and post-cured (or secondary vulcanized) in an oven at 200°C for 4 hours to form a cured product. The cured product was visually observed for outer appearance (i.e., color and transparency), measured for hardness, tensile strength, elongation at break, and tear strength (crescent) according to JIS K6249, and tested for flame retardancy according to the UL94 standard. The results are shown in Table 1.

### Comparative Example 5

Dimethylvinylsiloxy-endcapped dimethylpolysiloxane (A1) having a DOP of 750, 60 parts, was mixed with 40 parts of fumed silica (C1) having a BET specific surface area of 300 m²/g (Aerosil 300, Nippon Aerosil Co., Ltd.), 8 parts of hexamethyldisilazane, and 2.0 parts of water at room temperature for 30 minutes. The mixture was heated to 150°C, stirred for 3 hours, and cooled, yielding a silicone rubber base.

To 100 parts of the silicone rubber base, were added 40 parts of the dimethylpolysiloxane (A1), 5 parts of trimethylsiloxy-endcapped dimethylpolysiloxane (A2) having 2.5 mol% of methyl groups on side chains replaced by vinyl groups and having a DOP of 200, 1.79 parts (SiH/total vinyl = 1.8 mol/mol) of trimethylsiloxy-endcapped methylhydrogenpolysiloxane (B1) having SiH groups on side chains (DOP: 27, SiH content: 0.0069 mol per gram of trimethylsiloxy-endcapped dimethylsiloxane/methylhydrogensiloxane copolymer) as a crosslinker, 0.10 part of 3-isocyanatopropyltriethoxysilane (F1), and 0.10 part of ethynylcyclohexanol as a reaction inhibitor. The mixture was stirred for 15 minutes, yielding a silicone rubber blend having a viscosity of 650 Pa·s at 25°C as measured by a BS type viscometer with No. 7 rotor at 10 rpm.

The silicone rubber blend was mixed with 0.25 part of a toluene solution of platinum-1,3-divinyl-1,1,3,3-tetramethyldisiloxane complex (D1) having a Pt concentration of 1 wt% (a molar ratio of (F1)/platinum in (D1) = 31.6), forming a homogeneous silicone rubber composition. The composition was press cured (or primary vulcanized) at 120°C for 10 minutes and post-cured (or secondary vulcanized) in an oven at 200°C for 4 hours to form a cured product. The cured product was visually observed for outer appearance (i.e., color and transparency), measured for hardness, tensile strength, elongation at break, and tear strength (crescent) according to JIS K6249, and tested for flame retardancy according to the UL94 standard. The results are shown in Table 1.

### Comparative Example 6

Dimethylvinylsiloxy-endcapped dimethylpolysiloxane (A1) having a DOP of 750, 60 parts, was mixed with 40 parts of fumed silica (C1) having a BET specific surface area of 300 m²/g (Aerosil 300, Nippon Aerosil Co., Ltd.), 8 parts of hexamethyldisilazane, and 2.0 parts of water at room temperature for 30 minutes. The mixture was heated to 150°C, stirred for 3 hours, and cooled, yielding a silicone rubber base.

To 100 parts of the silicone rubber base, were added 40 parts of the dimethylpolysiloxane (A1), 5 parts of trimethylsiloxy-endcapped dimethylpolysiloxane (A2) having 2.5 mol% of methyl groups on side chains replaced by vinyl groups and having a DOP of 200, 1.79 parts (SiH/total vinyl = 1.8 mol/mol) of trimethylsiloxy-endcapped methylhydrogenpolysiloxane (B1) having SiH groups on side chains (DOP: 27, SiH content: 0.0069 mol per gram of trimethylsiloxy-endcapped dimethylsiloxane/methylhydrogensiloxane copolymer) as a crosslinker, 0.01 part of benzotriazole (E1) and 3 parts of aluminum hydroxide (Higilite® H320I-LS by Showa Denko K.K.) instead of component (F) as flame retardants, and 0.10 part of ethynylcyclohexanol as a reaction inhibitor. The mixture was stirred for 15 minutes, yielding a silicone rubber blend having a viscosity of 640 Pa·s at 25°C as measured by a BS type viscometer with No. 7 rotor at 10 rpm.

The silicone rubber blend was mixed with 0.25 part of a toluene solution of platinum-1,3-divinyl-1,1,3,3-tetramethyldisiloxane complex (D1) having a Pt concentration of 1 wt% (a molar ratio of (E1)/platinum in (D1) = 6.7), forming a homogeneous silicone rubber composition. The composition was press cured (or primary vulcanized) at 120°C for 10 minutes and post-cured (or secondary vulcanized) in an oven at 200°C for 4 hours to form a cured product. The cured product was visually observed for outer appearance (i.e., color and transparency), measured for hardness, tensile strength, elongation at break, and tear strength (crescent) according to JIS K6249, and tested for flame retardancy according to the UL94 standard. The results are shown in Table 1.

### Comparative Example 7

Dimethylvinylsiloxy-endcapped dimethylpolysiloxane (A1) having a DOP of 750, 60 parts, was mixed with 40 parts of fumed silica (C1) having a BET specific surface area of 300 m²/g (Aerosil 300, Nippon Aerosil Co., Ltd.), 8 parts of hexamethyldisilazane, and 2.0 parts of water at room temperature for 30 minutes. The mixture was heated to 150°C, stirred for 3 hours, and cooled, yielding a silicone rubber base.

To 100 parts of the silicone rubber base, were added 40 parts of the dimethylpolysiloxane (A1), 5 parts of trimethylsiloxy-endcapped dimethylpolysiloxane (A2) having 2.5 mol% of methyl groups on side chains replaced by vinyl groups and having a DOP of 200, 1.79 parts (SiH/total vinyl = 1.8 mol/mol) of trimethylsiloxy-endcapped methylhydrogenpolysiloxane (B1) having SiH groups on side chains (DOP: 27, SiH content: 0.0069 mol per gram of trimethylsiloxy-endcapped dimethylsiloxane/methylhydrogensiloxane copolymer) as a crosslinker, 3 parts of aluminum hydroxide (Higilite^{®} H320I-LS by Showa Denko K.K.) instead of component (E) and 0.05 part of 3-isocyanatopropyltriethoxysilane (F1) as flame retardants, and 0.10 part of ethynylcyclohexanol as a reaction inhibitor. The mixture was stirred for 15 minutes, yielding a silicone rubber blend having a viscosity of 680 Pa·s at 25°C as measured by a BS type viscometer with No. 7 rotor at 10 rpm.

The silicone rubber blend was mixed with 0.25 part of a toluene solution of platinum-1,3-divinyl-1,1,3,3-tetramethyldisiloxane complex (D1) having a Pt concentration of 1 wt% (a molar ratio of (F1)/platinum in (D1) = 15.8), forming a homogeneous silicone rubber composition. The composition was press cured (or primary vulcanized) at 120°C for 10 minutes and then post-cured (or secondary vulcanized) in an oven at 200°C for 4 hours to form a cured product. The cured product was visually observed for outer appearance (i.e., color and transparency), measured for hardness, tensile strength, elongation at break, and tear strength (crescent) according to JIS K6249, and tested for flame retardancy according to the UL94 standard. The results are shown in Table 1.

### Comparative Example 8

Dimethylvinylsiloxy-endcapped dimethylpolysiloxane (A1) having a DOP of 750, 60 parts, was mixed with 40 parts of fumed silica (C1) having a BET specific surface area of 300 m²/g (Aerosil 300, Nippon Aerosil Co., Ltd.), 8 parts of hexamethyldisilazane, and 2.0 parts of water at room temperature for 30 minutes. The mixture was heated to 150°C, stirred for 3 hours, and cooled, yielding a silicone rubber base.

To 100 parts of the silicone rubber base, were added 105 parts of the dimethylpolysiloxane (A1), 5 parts of trimethylsiloxy-endcapped dimethylpolysiloxane (A2) having 2.5 mol% of methyl groups on side chains replaced by vinyl groups and having a DOP of 200, 2.40 parts (SiH/total vinyl = 1.8 mol/mol) of trimethylsiloxy-endcapped methylhydrogenpolysiloxane (B1) having SiH groups on side chains (DOP: 27, SiH content: 0.0069 mol per gram of trimethylsiloxy-endcapped dimethylsiloxane/methylhydrogensiloxane copolymer) as a crosslinker, 240 parts of aluminum hydroxide (Higilite® H320I-LS by Showa Denko K.K.) as a flame retardant, and 0.10 part of ethynylcyclohexanol as a reaction inhibitor. The mixture was stirred for 15 minutes, yielding a silicone rubber blend having a viscosity of 730 Pa·s at 25°C as measured by a BS type viscometer with No. 7 rotor at 10 rpm.

The silicone rubber blend was mixed with 0.25 part of a toluene solution of platinum-1,3-divinyl-1,1,3,3-tetramethyldisiloxane complex (D1) having a Pt concentration of 1 wt%, forming a homogeneous silicone rubber composition. The composition was press cured (or primary vulcanized) at 120°C for 10 minutes and post-cured (or secondary vulcanized) in an oven at 200°C for 4 hours to form a cured product. The cured product was visually observed for outer appearance (i.e., color and transparency), measured for hardness, tensile strength, elongation at break, and tear strength (crescent) according to JIS K6249, and tested for flame retardancy according to the UL94 standard. The results are shown in Table 1.

**Table 1**

| | Example | | | Comparative Example | | | | | | | |
|---|---|---|---|---|---|---|---|---|---|---|---|
| | 1 | 2 | 3 | 1 | 2 | 3 | 4 | 5 | 6 | 7 | 8 |
| Outer appearance (color) | colorless | colorless | colorless | colorless | colorless | colorless | colorless | colorless | white | white | white |
| Outer appearance (transparency) | translucent | translucent | translucent | translucent | translucent | translucent | translucent | translucent | opaque | opaque | opaque |
| Hardness (Durometer A) | 43 | 44 | 41 | 43 | 41 | 43 | 40 | 42 | 44 | 46 | 62 |
| Tensile strength, MPa | 10.0 | 10.6 | 11.5 | 11.0 | 10.9 | 10.5 | 10.8 | 10.0 | 10.1 | 9.8 | 4.0 |
| Elongation at break, % | 640 | 760 | 740 | 640 | 820 | 770 | 860 | 770 | 690 | 620 | 380 |
| Tear strength (crescent), kN/m | 34 | 38 | 35 | 35 | 34 | 33 | 36 | 35 | 37 | 34 | 8 |
| Flame retardancy (UL94) | V-1 | V-1 | V-1 | burned down | burned down | burned down | burned down | burned down | burned down | burned down | V-1 |

## Claims

1. An addition-curable silicone rubber composition comprising:
(A) 100 parts by weight of an alkenyl-containing organopolysiloxane having at least two silicon-bonded alkenyl groups per molecule,
(B) an organohydrogenpolysiloxane having at least two silicon-bonded hydrogen atoms per molecule, in an amount of 0.2 to 20 parts by weight per 100 parts by weight of component (A),
(C) reinforcing silica fine powder having a specific surface area of at least 50 m²/g as measured by the BET method, in an amount of 5 to 80 parts by weight per 100 parts by weight of components (A) and (B) combined,
(D) a catalytic amount of a platinum catalyst,
(E) a triazole compound in an amount of 4 to 100 moles per mole of platinum in component (D), and
(F) an isocyanate compound in an amount of 4 to 100 moles per mole of platinum in component (D).

2. The composition of claim 1 wherein component (E) is selected from the group consisting of 1,2,3-triazole, 1,2,4-triazole, and derivatives thereof.

3. The composition of claim 2 wherein component (E) is benzotriazole.

4. The composition of any one of claims 1 to 3 wherein component (F) is selected from the group consisting of an alkyl isocyanate compound, aryl isocyanate compound, and isocyanate silane compound which is an isocyanate having a silane moiety.

5. The composition of claim 4 wherein component (F) is a compound having the formula (I): 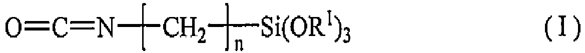 wherein R¹ is alkyl or trialkylsilyl and n is an integer of 1 to 6.

6. The composition of any one of claims 1 to 5, which is heat cured into a silicone rubber having a flame retardancy rated as V-2 or better level according to the UL94 standard.

## Patentansprüche

1. Additionshärtbare Siliconkautschukzusammensetzung, umfassend:
(A) 100 Gewichtsteile eines alkenylhaltigen Organopolysiloxans mit mindestens zwei Silicium-gebundenen Alkenylgruppen pro Molekül,
(B) ein Organohydrogenpolysiloxan mit mindestens zwei Silicium-gebundenen Wasserstoffatomen pro Molekül, in einer Menge von 0,2 bis 20 Gewichtsteilen pro 100 Gewichtsteile an Komponente (A),
(C) verstärkendes Silica-Feinpulver mit einer spezifischen Oberfläche von mindestens 50 m²/g, gemessen durch die BET-Methode, in einer Menge von 5 bis 80 Gewichtsteilen pro 100 Gewichtsteile an kombinierten Komponenten (A) und (B),
(D) eine katalytische Menge eines Platinkatalysators,
(E) eine Triazolverbindung in einer Menge von 4 bis 100 Molen pro Mol Platin in Komponente (D), und
(F) ein Isocyanatverbindung in einer Menge von 4 bis 100 Molen pro Mol Platin in Komponente (D).

2. Zusammensetzung nach Anspruch 1, wobei Komponente (E) aus der Gruppe gewählt ist, bestehend aus 1,2,3-Triazol, 1,2,4-Triazol und Derivaten davon.

3. Zusammensetzung nach Anspruch 2, wobei Komponente (E) Benzotriazol ist.

4. Zusammensetzung nach mindestens einem der Ansprüche 1 bis 3, wobei Komponente (F) aus der Gruppe gewählt ist, bestehend aus einer Alkylisocyanatverbindung, Arylisocyanatverbindung und Isocyanatsilanverbindung, die ein Isocyanat mit einer Silaneinheit ist.

5. Zusammensetzung nach Anspruch 4, wobei Komponente (F) eine Verbindung der Formel (I) ist: 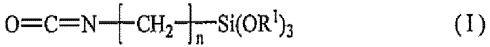 worin R¹ Alkyl oder Trialkylsilyl ist und n eine ganze Zahl von 1 bis 6.

6. Zusammensetzung nach mindestens einem der Ansprüche 1 bis 5, welche wärmegehärtet wird zu einem Siliconkautschuk mit einem Flammverzögerungsvermögen, das gemäß dem UL94-Standard als V-2 oder einem besseren Level eingestuft wird.

## Revendications

1. Une composition de caoutchouc de silicone durcissable par addition comprenant:
(A) 100 parties en poids d'un organopolysiloxane contenant un alcényle ayant au moins deux groupes alcényle liés à du silicium par molécule,
(B) un organohydrogénopolysiloxane ayant au moins deux atomes d'hydrogène liés à du silicium par molécule, en une quantité de 0,2 à 20 parties en poids pour 100 parties en poids du composant (A),
(C) une poudre fine de silice de renforcement ayant une surface spécifique d'au moins 50 m² / g, mesurée par la méthode BET, en une quantité de 5 à 80 parties en poids pour 100 parties en poids des composants (A) et (B) combinés,
(D) une quantité catalytique d'un catalyseur au platine,
(E) un composé de triazole en une quantité de 4 à 100 moles par mole de platine dans le composant (D), et
(F) un composé d'isocyanate en une quantité de 4 à 100 moles par mole de platine dans le composant (D).

2. La composition selon la revendication 1, dans laquelle le composant (E) est choisi parmi le groupe constitué par le 1,2,3-triazole, le 1,2,4-triazole, et leurs dérivés.

3. La composition selon la revendication 2, dans laquelle le composant (E) est le benzotriazole.

4. La composition selon l'une quelconque des revendications 1 à 3, dans laquelle le composant (F) est choisi parmi le groupe constitué par un composé isocyanate d'alkyle, un composé isocyanate d'aryle et un composé de isocyanate de silane qui est un isocyanate ayant un groupement silane.

5. La composition selon la revendication 4, dans laquelle le composant (F) est un composé ayant la formule (I):
O=C=N[-CH₂-⁆ₙ-Si(OR¹)₃ (I)
dans laquelle R¹ représente un groupe alkyle ou trialkylsilyle et n est un nombre entier de 1 à 6.

6. La composition selon l'une quelconque des revendications 1 à 5, qui est durcie à chaud dans un caoutchouc de silicone ayant un retard de flamme classé en V-2 ou un meilleur niveau selon la norme UL94.
